# EUROPEAN PATENT APPLICATION

(11) **EP 4 712 312 A1**
(43) Date of publication of application: **18.03.2026**
(21) Application number: 25201744.7
(22) Date of filing: 11.09.2025
(51) Int. Cl.: H02K 1/20, H02K 5/20, H02K 9/19

(54) **MOTOR, POWERTRAIN, AND VEHICLE**

(30) Priority: 12.09.2024 CN 202411286244
(71) Applicant: Huawei Digital Power Technologies Co., Ltd., Shenzhen, Guangdong 518043 (CN)
(72) Inventor: HUANGFU, Yuzhao, Shenzhen, 518043 (CN); ZHANG, Bowen, Shenzhen, 518043 (CN); LUO, Dong, Shenzhen, 518043 (CN); ZHAO, Xinying, Shenzhen, 518043 (CN)
(74) Representative: Gill Jennings & Every LLP

(57) **Abstract**

This application provides a motor, a powertrain, and a vehicle, and relates to the field of electric vehicles. The motor includes a motor housing and a plurality of stator cores. Winding slots of each stator core are arranged in a circumferential direction of the motor. The plurality of stator cores include two first stator cores and one second stator core, and the second stator core is arranged between the two first stator cores in an axial direction of the motor. The second stator core, the two first stator cores, and the motor housing form a first gap. One opening of one first through hole and one opening of another first through hole of each first stator core are exposed to the first gap in the axial direction of the motor, and a maximum spacing between the one first through hole and an axis of the motor is less than a minimum spacing between the another first through hole and the axis of the motor in the radial direction of the motor. This application enhances the cooling efficiency of the motor by adjusting flow channels of the plurality of stator cores, thereby ensuring normal traveling of the vehicle.

## Description

### TECHNICAL FIELD

This application relates to the field of electric vehicle technologies, and in particular, to a motor, a powertrain, and a vehicle.

### BACKGROUND

In the new energy vehicle industry, as electric vehicles continuously develop toward high power density, heat generated by a motor in an operating process also gradually increases. To control a temperature rise of the motor, cooling and heat dissipation need to be performed on components such as a stator core and a winding of the motor, to avoid reduced efficiency due to excessive temperature. However, a current heat dissipation solution for the motor has low cooling efficiency, which is not conducive to improving the efficiency and a service life of the motor, and further causes adverse impact on normal traveling of a vehicle.

### SUMMARY

Embodiments of this application provide a motor, a powertrain, and a vehicle that can enhance cooling efficiency.

According to a first aspect, an embodiment of this application provides a motor. The motor includes one motor housing and a plurality of stator cores, the one motor housing is configured to accommodate the plurality of stator cores, a plurality of winding slots of each stator core are sequentially arranged in a circumferential direction of the motor, each winding slot is configured to accommodate a plurality of conducting wires, and the plurality of stator cores include two first stator cores and one second stator core.

Each first stator core includes a plurality of first through holes, the plurality of first through holes penetrate each first stator core in an axial direction of the motor, and the plurality of first through holes of each first stator core are spaced from the plurality of winding slots of each first stator core.

The one second stator core is arranged between the two first stator cores in the axial direction of the motor.

At least one part of an outer circumferential surface of the one second stator core, the two first stator cores, and the one motor housing form one first gap. One opening of one first through hole and one opening of another first through hole of each first stator core are exposed to the first gap in the axial direction of the motor. A maximum spacing between the one first through hole and an axis of the motor is less than a minimum spacing between the another first through hole and the axis of the motor in the radial direction of the motor.

In this embodiment of this application, when the motor is in an operating state, an alternating current applied to the plurality of conducting wires of the motor may cause a resistance loss. An alternating flux generated after the conducting wire is energized further induces a hysteresis loss and an eddy current loss in the plurality of stator cores, causing heat generated by the stator core and the winding to continuously increase.

In this embodiment of this application, each first stator core includes one first through hole and another first through hole. A spacing between the one first through hole and the axis of the motor is different from a spacing between the another first through hole and the axis of the motor in the radial direction of the motor. Coolant is conveyed to the one first through hole and the another first through hole, so that heat dissipation effect on the stator core and the winding slot can be considered, and multi-layer cooling is implemented in the motor.

In this embodiment of this application, the one first through hole is spaced from the another first through hole, so that the one first through hole and the another first through hole form two parallel flow channels in a single first stator core. To convey the coolant to the one first through hole and the another first through hole of each first stator core, in this embodiment of this application, the at least one part of the outer circumferential surface of the second stator core, the two first stator cores, and an inner circumferential surface of the motor housing form one first gap, and one opening of the one first through hole and one opening of the another first through hole of each first stator core are exposed to the first gap. In this way, the coolant conveyed from the inner circumferential surface of the motor housing can flow to one first through hole and another first through hole of each of the two first stator cores through the first gap. This helps reduce a loss of the coolant on a transmission path of each first stator core.

The one first through hole is used as an example. That the one opening of the one first through hole is exposed to the first gap means that the one opening of the one first through hole and the first gap are adjacently arranged in the axial direction of the motor, so that the coolant in the first gap can directly flow to the one first through hole.

On a basis that each first stator core includes the one first through hole and the another first through hole, the coolant is conveyed to the one first through hole and the another first through hole in another manner. In a possible manner, the motor does not include the one second stator core, a radial flow channel is additionally provided in each first stator core, and the one first through hole communicates with the another first through hole through the radial flow channel. After the coolant flows into the another first through hole from the inner circumferential surface of the motor housing, the coolant may continue to flow to the one first through hole. In this case, the one first through hole and the another first through hole actually form a flow channel in serial connection, and cooling effect affect each other. In addition, if a blockage occurs at a position, a flow status of the coolant in the entire first stator core is affected. In addition, in this manner, a size of the flow channel provided in the first stator core is increased, and electromagnetic performance of the first stator core is adversely affected.

In another possible manner, the one second stator core of the motor is not located between the one first stator core and the other first stator core, but is located on a side that is of the one first stator core and that is away from the other first stator core in the axial direction of the motor. One channel of coolant needs to first flow through another first through hole and one first through hole of the one first stator core before flowing to one first through hole of the other first stator core, and another channel of coolant may directly flow to another first through hole of the other first stator core. That is, the another first through hole of the one first stator core, the one first through hole of the one first stator core, and the one first through hole of the other first stator core form one flow channel in serial connection. As the coolant flows in the flow channel in serial connection, a temperature continuously increases, and cooling effect of the coolant in the one first through hole of the other first stator core is poorer than cooling effect of the coolant in the another first through hole of the other first stator core, and the other first stator core may have uneven cooling effect.

Compared with the foregoing two manners, in this embodiment of this application, the one second stator core is located between the one first stator core and the other first stator core, and the one first through hole and the another first through hole of each first stator core share the first gap of the one second stator core. In other words, in the two first stator cores, flow channels formed by the one first through hole and the another first through hole are connected in parallel, and do not interfere with each other. Both the flow channels formed by the one first through hole and the another first through hole start from the first gap of the one second stator core. The coolant may directly flow to first through holes at different positions in different first stator cores through the first gap, to implement independent cooling of each first stator core. This helps reduce the loss of the coolant on the transmission path, and further reduce a difference in cooling effect at different positions in a same first stator core. In this way, overall cooling efficiency of the motor is improved.

In an embodiment, an outer diameter of the at least one part of the outer circumferential surface of the one second stator core is greater than a maximum spacing between each winding slot and the axis of the motor in the radial direction of the motor, and the outer diameter of the at least one part of the outer circumferential surface of the one second stator core is less than the maximum spacing between the one first through hole and the axis of the motor in the radial direction of the motor.

In this embodiment of this application, the one first through hole is closer to the axis of the motor than the another first through hole in the radial direction of the motor. That the maximum spacing between the one first through hole and the axis of the motor is greater than the maximum spacing between each winding slot and the axis of the motor indicates that a projection of the one first through hole does not overlap each winding slot in the circumferential direction of the motor. To enable the first gap to convey the coolant to the one first through hole, because the one first through hole is not located between two winding slots, the outer diameter of the at least one part of the outer circumferential surface of the second stator core may be adjusted to be less than the maximum spacing between the one first through hole and the axis of the motor. In this case, a position relationship between the second stator core and the inner circumferential surface of the motor housing is caused by the outer diameter of the second stator core. In an embodiment, the entire outer circumferential surface of the second stator core is spaced from the inner circumferential surface of the motor housing in the radial direction of the motor.

In this embodiment of this application, the outer diameter of the second stator core cannot be excessively small either. Otherwise, adverse impact may be caused on the conducting wire accommodated in the winding slot. Therefore, the outer diameter of the second stator core is greater than the maximum spacing between each winding slot and the axis of the motor, to ensure that winding slots of the first stator core and winding slots of the second stator core can be aligned in the axial direction of the motor.

In an embodiment, the one first through hole is arranged between two adjacent winding slots in the circumferential direction of the motor, and the maximum spacing between the one first through hole and the axis of the motor is less than or equal to the maximum spacing between each winding slot and the axis of the motor in the radial direction of the motor; and

The at least one part of the outer circumferential surface of the one second stator core includes one first slot, the one first slot penetrates the one second stator core in the axial direction of the motor, one opening of the one first slot faces the inner circumferential surface of the one motor housing in the radial direction of the motor, and at least one part of a projection of the one first through hole is within a projection of the one first slot in the axial direction of the motor.

In this embodiment of this application, one first stator core is used as an example. A position of the one first through hole in the one first stator core may also change based on a heat dissipation requirement. For example, the one first through hole is located between two adjacent winding slots in the circumferential direction of the motor. In terms of structure, the maximum spacing between the one first through hole and the axis of the motor is less than or equal to the maximum spacing between each winding slot and the axis of the motor. Because a distance between the one first through hole and the winding slot is shortened, cooling effect on the plurality of conducting wires in the winding slot can be further enhanced.

In this embodiment of this application, a structure or the outer diameter that is of the one second stator core and that is used to form an outer circumferential surface of the first gap needs to be correspondingly adjusted based on the position of the one first through hole. When the one first through hole is located between two adjacent winding slots, because the outer diameter of the one second stator core cannot be less than the maximum spacing between the winding slot and the axis of the motor, a part of the outer circumferential surface of the one second stator core may be recessed toward the axis of the motor in the radial direction of the motor, to form one first slot, so that the first slot is configured to form the first gap with the two first stator cores and the inner circumferential surface of the motor housing. The first slot penetrates the one second stator core in the axial direction of the motor, so that the one second stator core plays a shunting role, to reduce flow resistance of the coolant. One opening of the first slot faces the inner circumferential surface of the motor housing in the radial direction of the motor, and a slot bottom of the first slot and the one first through hole are both located between two same winding slots, so that a projection of the first slot in the axial direction of the motor can cover at least one part of a projection of the one first through hole in the axial direction of the motor, to implement communication between the first slot and the one first through hole.

In an embodiment, a minimum width of the one first slot in the circumferential direction of the motor is greater than an inner diameter of each first through hole.

In this embodiment of this application, the first gap formed with participation of the first slot is used to guide the coolant to the one first through hole and the another first through hole of each first stator core. The minimum width of the first slot in the circumferential direction of the motor is greater than the inner diameter of each first through hole, so that the projection of the first slot in the axial direction of the motor can cover the one first through hole and the another first through hole. This helps increase a volume of the coolant that can be received by the first slot, and reduce resistance of the coolant flowing from the first slot to the one first through hole and the another first through hole.

In an embodiment, a width of the one opening of the one first slot is greater than a width of the slot bottom of the one first slot in the circumferential direction of the motor.

In this embodiment of this application, the opening and the slot bottom of the first slot are respectively close to the inner circumferential surface of the motor housing and the axis of the motor, the coolant flows from the opening to the slot bottom of the first slot, and a circumferential width of the opening of the first slot is greater than a circumferential width of the slot bottom of the first slot. This helps reduce flow resistance of the coolant in the first slot.

In an embodiment, the maximum spacing between the one first slot and the axis of the motor is less than or equal to the maximum spacing between the another first through hole and the axis of the motor in the radial direction of the motor.

This embodiment of this application helps increase a size of the first gap, improve circulation at the first gap, and further avoid a case in which cooling efficiency of the winding is reduced because excessive coolant overflows to an outer circumferential surface of each first stator core. In an embodiment, the another first through hole is spaced from the outer circumferential surface of each first stator core in the radial direction of the motor. In this embodiment of this application, the another first through hole receives the coolant through the first gap of the one second stator core. Therefore, a spacing between the another first through hole and the outer circumferential surface of each first stator core does not prevent the coolant from flowing into the another first through hole.

In an embodiment, the at least one part of the outer circumferential surface of the one second stator core includes a plurality of first slots, the plurality of first slots are sequentially arranged in the circumferential direction of the motor, each first slot is used to form the one first gap, and a ratio of a quantity of first slots of the one second stator core to a quantity of first through holes of each first stator core is less than or equal to 1/2.

In this embodiment of this application, the one second stator core includes the plurality of first slots, the quantity of slots of the one second stator core is less than or equal to half of the quantity of first through holes of each first stator core, and each first slot is configured to communicate at least two first through holes of each first stator core. This helps improve efficiency of allocating coolant to each first slot. The plurality of first slots are sequentially arranged in the circumferential direction of the motor, and the first slots are distributed at different positions of the one second stator core, so that the coolant can be conveyed to first through holes located at different positions of the first stator core, and a heat dissipation area of the coolant in the stator core can be increased.

In an embodiment, the inner circumferential surface of the one motor housing includes one second slot, the one second slot is recessed away from the one second stator core in the radial direction of the motor, and the one second slot extends in the circumferential direction of the motor.

In this embodiment of this application, a part of the inner circumferential surface of the motor housing is recessed away from the one second stator core in the radial direction of the motor, to form the second slot, and the second slot is configured to participate in forming the first gap. The second slot extends in the circumferential direction of the motor, so that the coolant can flow in the circumferential direction of the motor, and communication between the plurality of first slots in the one second stator core is implemented. This helps reduce flow resistance of the coolant and improve heat dissipation efficiency.

In an embodiment, the inner circumferential surface of the one motor housing includes one liquid inlet, and a spacing between a center of the one liquid inlet and the one second stator core is less than spacings between the center of the one liquid inlet and two first stator cores in the axial direction of the motor.

In this embodiment of this application, the coolant is conveyed from the inner circumferential surface of the motor housing to the one second stator core through the liquid inlet. The one second stator core is located between the two first stator cores in the axial direction of the motor, and an axial spacing between the center of the liquid inlet and the one second stator core is less than a spacing between the center of the liquid inlet and each first stator core, so that the coolant flowing out from the liquid inlet can smoothly flow to the one second stator core. In an embodiment, the liquid inlet is aligned with the first slot in the radial direction of the motor. In this embodiment of this application, the coolant can directly flow into the first slot from the liquid inlet. This shortens a transmission path of the coolant between the liquid inlet and the first slot, and helps reduce an energy loss of the coolant. In an embodiment, the liquid inlet is located in the second slot.

In an embodiment, a thickness of the one second stator core is less than a thickness of either of the two first stator cores in the axial direction of the motor.

In this embodiment of this application, the one second stator core mainly functions to allocate the coolant. An axial thickness of the one second stator core is less than an axial thickness of each first stator core, so that the coolant can flow from the one second stator core to each first stator core more quickly. At least one part of the outer circumferential surface of the one second stator core needs to be spaced from the inner circumferential surface of the motor housing. Therefore, for the at least one part of the outer circumferential surface of the one second stator core, a means like decreasing the outer diameter or providing the first slot is used. In this embodiment of this application, the axial thickness of the one second stator core is relatively small. This is equivalent to slight overall adjustment of the plurality of stator cores, and can reduce impact on overall electromagnetic performance of the plurality of stator cores.

In this embodiment of this application, the axial thickness of each first stator core is relatively large, the plurality of first through holes of each first stator core can receive the coolant through the first gap, and the coolant can cool each first stator core with the relatively large axial thickness. This helps expand a contact area between the coolant and the plurality of stator cores.

In an embodiment, the plurality of stator cores further include another second stator core and one third stator core, and the another second stator core is arranged between one first stator core and the one third stator core in the axial direction of the motor.

The one third stator core includes a plurality of second through holes, the plurality of second through holes penetrate the one third stator core in the axial direction of the motor, and a maximum spacing between the plurality of second through holes and the axis of the motor is less than the maximum spacing between the another first through hole and the axis of the motor in the radial direction of the motor.

At least one part of an outer circumferential surface of the another second stator core, the one first stator core, the one third stator core, and the one motor housing form one second gap. The other opening of the one first through hole, the other opening of the another first through hole, one opening of the one second through hole, and one opening of the another second through hole are exposed to the one second gap in the axial direction of the motor. A maximum spacing between the one second through hole and the axis of the motor is less than a minimum spacing between the another second through hole and the axis of the motor in the radial direction of the motor.

In this embodiment of this application, because the plurality of first through holes of the one first stator core and the plurality of second through holes of the third stator core are not completely aligned, if the one first stator core and the third stator core are directly adjacently arranged in the axial direction of the motor, coolant in the another first through hole cannot flow to the third stator core. Therefore, in this embodiment of this application, the second gap is formed by using the another second stator core, and a projection of the second gap in the axial direction of the motor covers the plurality of first through holes of the one first stator core and the plurality of second through holes of the third stator core, so that the second through hole can receive the coolant conveyed from the one first stator core.

In this embodiment of this application, the another second stator core not only implements flowing of the coolant between the one first stator core and the third stator core, but also can be used to alleviate a blocking problem and implement appropriate distribution of a flow of coolant in different stator cores.

If one of the one second through hole and the another second through hole is blocked, because the one second through hole and the another second through hole form two parallel flow channels, and the parallel flow channels do not affect each other, it is difficult for the other of the one second through hole and the another second through hole to play an anti-blocking role. The another second stator core in this embodiment of this application actually provides a scenario in which different parallel flow channels of the one first stator core and the third stator core are connected in series. For example, the one second through hole is blocked. Because the another second stator core is farther away from the liquid inlet than the one second stator core in the axial direction of the motor, a force for the coolant in the another second stator core is less than a force for the coolant in the one second stator core, so that the coolant in the one second through hole can flow back to the second gap of the another second stator core, and continue to flow into the another second through hole. Blocking of the another second through hole is similar.

In addition, even if no blockage occurs, when a flow in the one first through hole is greater than a flow in the another first through hole of the one first stator core, the flow of the coolant may further be reallocated through the another second stator core, that is, a part of the coolant in the one first through hole flows into the one second through hole through the second gap of the another second stator core, and another part of the coolant in the one first through hole flows into the another second through hole through the second gap of the another second stator core, to avoid a problem that local coolant is insufficient in the third stator core. A case in which the flow in the another first through hole is greater than the flow in the one first through hole of the one first stator core is similar.

In an embodiment, a thickness of the another second stator core is less than a thickness of either of the one first stator core or the third stator core in the axial direction of the motor.

In this embodiment of this application, the another second stator core mainly functions to allocate the coolant. An axial thickness of the another second stator core is less than the thickness of either of the one first stator core or the third stator core, so that the coolant can flow from the another second stator core to the third stator core more quickly. In addition, impact on overall electromagnetic performance of the plurality of stator cores can be reduced.

In this embodiment of this application, the axial thickness of the third stator core is relatively large, the plurality of second through holes of the third stator core can receive the coolant through the second gap, and the coolant can cool the third stator core with the relatively large axial thickness. This helps expand a contact area between the coolant and the plurality of stator cores.

In an embodiment, a spacing between the one third stator core and one end of the plurality of conducting wires is less than a spacing between the one first stator core and the one end of the plurality of conducting wires. In this embodiment of this application, the third stator core, the another second stator core, and the one first stator core are sequentially arranged in the axial direction of the motor. A maximum radial spacing between the plurality of second through holes and the axis of the motor is less than a maximum radial spacing between the another first through hole and the axis of the motor, that is, the plurality of second through holes are closer to the plurality of conducting wires in the winding slot than the another first through hole. The third stator core is closer to the one end of the plurality of conducting wires than the one first stator core. This helps enhance cooling efficiency of the coolant in the second through hole on an end part of the conducting wire.

In an embodiment, the plurality of stator cores further include one fourth stator core, the one third stator core is located between the another second stator core and the one fourth stator core in the axial direction of the motor, and the one end of the plurality of conducting wires is exposed to each winding slot of the one fourth stator core.

The one fourth stator core includes a plurality of third through holes, the plurality of third through holes penetrate the one fourth stator core, extension directions of the plurality of third through holes intersect the axis of the motor, one opening of each third through hole and the other opening of the another second through hole of the one third stator core are adjacently arranged in the axial direction of the motor, and a spacing between each third through hole and the axis of the motor decreases from the one opening of each third through hole to the other opening of the third through hole in the radial direction of the motor.

In this embodiment of this application, the fourth stator core, the third stator core, and the another second stator core are sequentially arranged in the axial direction of the motor. The fourth stator core is closer to the one end of the plurality of conducting wires than the third stator core in the axial direction of the motor, and the one end of the plurality of conducting wires is exposed to each winding slot of the fourth stator core. The fourth stator core includes a plurality of third through holes, one third through hole communicates with the another second through hole of the third stator core, and each third through hole can receive the coolant conveyed by the third stator core. Different from extension directions of the first through hole and the second through hole, an extension direction of the third through hole of the fourth stator core intersects with the axis of the motor, and a spacing between the third through hole and the one end of the plurality of conducting wires gradually decreases in the radial direction of the motor, so that the coolant can be sprayed from the third through hole to the outside of the one end of the plurality of conducting wires, to cool an end part of the winding and improve utilization of the coolant.

In an embodiment, the one fourth stator core further includes a plurality of fourth through holes, the plurality of fourth through holes penetrate the one fourth stator core in the axial direction of the motor, a maximum spacing between each fourth through hole and the axis of the motor is less than a minimum spacing between each third through hole and the axis of the motor in the radial direction of the motor, and one opening of each fourth through hole and the one second through hole of the one third stator core are adjacently arranged in the axial direction of the motor.

In this embodiment of this application, the plurality of fourth through holes of the fourth stator core extend in the axial direction of the motor, each fourth through hole communicates with the one second through hole of the third stator core, and the fourth through hole can receive the coolant from the third stator core. Each fourth through hole is closer to the axis of the motor than each third through hole in the radial direction of the motor. The fourth through hole cooperates with the third through hole, so that three-dimensional cooling can be implemented on the plurality of conducting wires, and heat dissipation effect on the end part of the winding is comprehensively improved.

According to a second aspect, an embodiment of this application provides a powertrain. The powertrain includes a motor controller, a reducer, and the motor according to any one of the embodiments of the first aspect. The motor controller is configured to provide electric energy for the winding of the motor, and the motor is configured to be in transmission connection to the reducer.

In this embodiment of this application, the motor according to the first aspect is used in the powertrain, so that cooling efficiency for the winding and the stator core can be improved, and safety performance of operating efficiency of the motor is enhanced. This helps improve power density of the powertrain, and reduce a safety risk of the powertrain.

According to a third aspect, an embodiment of this application provides a vehicle. The vehicle includes a vehicle frame, a battery pack, and the powertrain according to the second aspect. The vehicle frame is configured to fasten the battery pack and the powertrain, the battery pack is configured to supply power to the motor through the motor controller, and the powertrain is configured to drive a wheel of the vehicle through the motor.

In this embodiment of this application, the powertrain according to the second aspect is used in the vehicle, to improve heat dissipation effect for the powertrain, and ensure smooth and safe traveling of the vehicle.

### BRIEF DESCRIPTION OF DRAWINGS

To describe technical solutions in embodiments of this application more clearly, the following describes the accompanying drawings used in embodiments of this application.
FIG. 1 is a diagram of a structure of a vehicle according to an embodiment of this application;
FIG. 2 is a diagram of a structure of a powertrain according to an embodiment of this application;
FIG. 3 is a diagram of a local structure of a motor according to an embodiment of this application;
FIG. 4 is a partial sectional view of a motor according to an embodiment of this application;
FIG. 5 is a partial sectional view of a motor according to an embodiment of this application;
FIG. 6 is a partial enlarged view of an M part in the motor shown in FIG. 5;
FIG. 7 is a diagram of a partial structure of a motor in a conventional technology;
FIG. 8 is a diagram of a partial structure of a motor according to an embodiment of this application;
FIG. 9 is a diagram of a structure of a second stator core according to an embodiment of this application;
FIG. 10 is a sectional view of a motor housing according to an embodiment of this application;
FIG. 11 is a partial exploded view of a motor according to an embodiment of this application;
FIG. 12 is a partial sectional view of a motor according to an embodiment of this application;
FIG. 13 is a diagram of a partial structure of a motor according to an embodiment of this application;
FIG. 14 is a partial sectional view of a motor according to an embodiment of this application;
FIG. 15 is a partial enlarged view of an N part in the motor shown in FIG. 14;
FIG. 16 is a partial exploded view of a motor according to an embodiment of this application; and
FIG. 17 is a partial sectional view of a motor according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Currently, a winding of a motor has low cooling efficiency. To resolve the foregoing problem, an embodiment of this application provides a motor. The motor includes a motor housing and a plurality of stator cores. The motor housing is configured to accommodate the plurality of stator cores. A plurality of winding slots of each stator core are sequentially arranged in a circumferential direction of the motor, and each winding slot is configured to accommodate a plurality of conducting wires of the winding.

The plurality of stator cores include two first stator cores and one second stator core. The two first stator cores are fastened to an inner circumferential surface of the motor housing. Each first stator core includes a plurality of first through holes, the plurality of first through holes penetrate each first stator core in an axial direction of the motor, and the plurality of first through holes of each first stator core are spaced from the plurality of winding slots of each first stator core. The one second stator core is arranged between the two first stator cores in the axial direction of the motor.

At least one part of an outer circumferential surface of the one second stator core and the inner circumferential surface of the motor housing are spaced from each other in a radial direction of the motor. The at least one part of the outer circumferential surface of the one second stator core, the two first stator cores, and the motor housing form a first gap. One first through hole and another first through hole of each first stator core receive, through the first gap, coolant output from the inner circumferential surface of the motor housing. One opening of the one first through hole and one opening of the another first through hole of each first stator core are exposed to the first gap in the axial direction of the motor. A maximum spacing between the one first through hole and an axis of the motor is less than a minimum spacing between the another first through hole and the axis of the motor in the radial direction of the motor.

In this embodiment of this application, through holes in different stator cores cooperate with slots, to enhance cooling effect on the stator core and the windings. The motor provided in embodiments of this application is used in a powertrain, and the powertrain including the motor in this application is used in a vehicle.

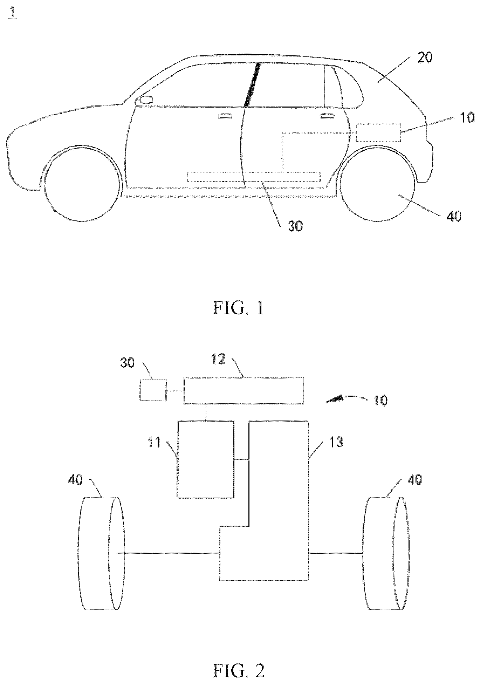

Refer to FIG. 1. FIG. 1 is a diagram of a structure of a vehicle 1 according to an embodiment of this application. In embodiments of this application, the vehicle 1 is a wheeled device driven or pulled by a power apparatus. In this embodiment of this application, the vehicle 1 includes a vehicle frame 20, a battery pack 30, and a powertrain 10. The vehicle frame 20 is a structural framework of the vehicle 1. The vehicle frame 20 is configured to mount the battery pack 30 and the powertrain 10, and can bear internal and external environmental loads of the vehicle 1. The battery pack 30 is configured to supply power to the powertrain 10, and the battery pack 30 may also be referred to as a power battery. The powertrain 10 is a power source of the vehicle 1, and the powertrain 10 is configured to drive a wheel 40 of the vehicle 1.

Refer to FIG. 2. FIG. 2 is a diagram of a structure of the powertrain 10 according to an embodiment of this application. In this embodiment of this application, the powertrain 10 includes a motor 11, a motor controller 12, and a reducer 13. The motor controller 12 is configured to: convert a direct current provided by the battery pack 30 into an alternating current, and transmit the alternating current to the motor 11. The motor 11 is in transmission connection with the reducer 13 to drive the wheel 40 to rotate.

The motor is an electromagnetic apparatus that implements conversion or transfer of electric energy according to the law of electromagnetic induction, and can generate drive torque. Specifically, in an embodiment, the motor includes a stator core, a motor rotor, a motor shaft, and a winding. After an alternating current transmitted by the motor controller is supplied to a plurality of wires of the winding, an alternating flux is generated. The alternating flux generated by the winding interacts with a permanent flux generated by the motor rotor, so that the motor rotor rotates relative to the stator core, and the motor rotor is fastened to the motor shaft. In this case, the motor shaft rotates with the motor rotor, and the stator core is rotatably connected to the motor shaft, so that the motor shaft can rotate relative to the stator core to convert electric energy into mechanical energy, and an output end of the motor shaft is configured to transmit the mechanical energy.

In an operating process of the motor, energy lost by the stator core and the winding may be gradually converted into heat. This causes a temperature rise of the winding. If cooling effect on the winding is poor, a service life of the winding is directly shortened and operating efficiency of the motor is reduced, and an electrical fault and a safety accident may be caused in a serious case.

In embodiments of this application, a structure of a flow channel of the stator core is improved, to enhance cooling efficiency on the stator core and the winding, so as to avoid adverse impact on the motor and improve safety performance of the vehicle.

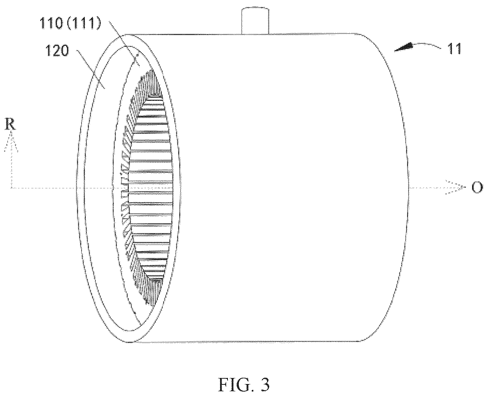

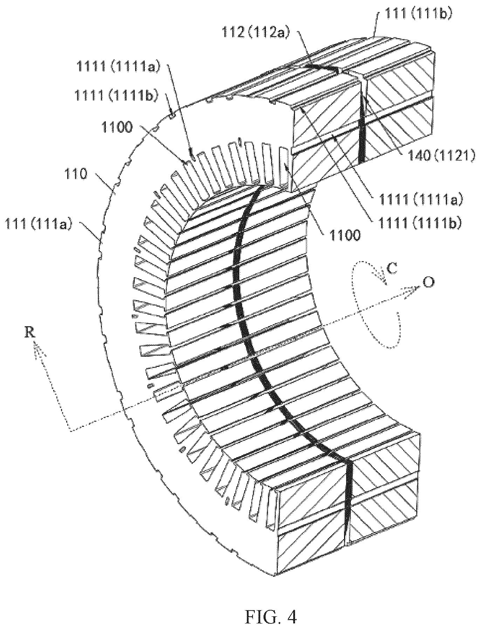

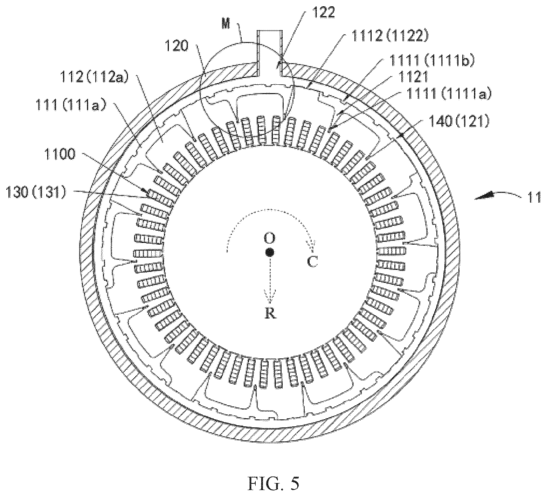

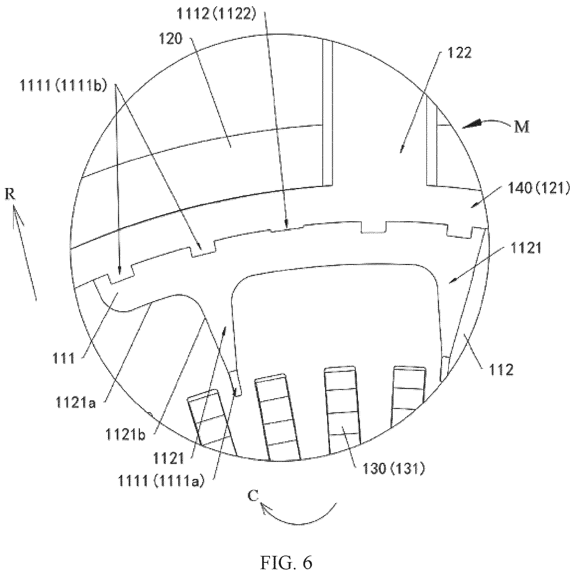

Refer to FIG. 3 to FIG. 6. FIG. 3 is a diagram of a local structure of the motor 11 according to an embodiment of this application. FIG. 4 is a partial sectional view of the motor 11 according to an embodiment of this application. FIG. 5 is a partial sectional view of the motor 11 according to an embodiment of this application. FIG. 6 is a partial enlarged view of an M part in the motor 11 shown in FIG. 5.

The motor 11 includes one motor housing 120 and a plurality of stator cores 110. The one motor housing 120 is configured to accommodate the plurality of stator cores 110. A plurality of winding slots 1100 of each stator core 110 are sequentially arranged in a circumferential direction C of the motor 11, and each winding slot 1100 is configured to accommodate a plurality of conducting wires 131. The plurality of stator cores 110 include two first stator cores 111 and one second stator core 112. The one second stator core 112 is arranged between the two first stator cores 111 in an axial direction of the motor 11. Each first stator core 111 includes a plurality of first through holes 1111, the plurality of first through holes 1111 penetrate each first stator core 111 in the axial direction of the motor 11, and the plurality of first through holes 1111 of each first stator core 111 are spaced from a plurality of winding slots 1100 of each first stator core 111.

At least one part of an outer circumferential surface of the one second stator core 112 is spaced from an inner circumferential surface of the one motor housing 120 in a radial direction R of the motor 11. The at least one part of the outer circumferential surface of the one second stator core 112, the two first stator cores 111, and the one motor housing 120 form one first gap 140, and one first through hole 1111 and another first through hole 1111 of each first stator core 111 receive, through the one first gap 140, coolant output from the inner circumferential surface of the one motor housing 120. One opening of the one first through hole 1111 and one opening of the another first through hole 1111 in each first stator core 111 are exposed to the one first gap 140 in the axial direction of the motor 11. A maximum spacing between the one first through hole 1111 and an axis O of the motor 11 is less than a minimum spacing between the another first through hole 1111 and the axis O of the motor 11 in the radial direction R of the motor 11.

In this embodiment of this application, for ease of description, the two first stator cores 111 are respectively denoted as a first stator core 111a and a first stator core 111b, the one second stator core 112 is denoted as a second stator core 112a, the one first through hole 1111 of each first stator core 111 is denoted as a first through hole 1111a, and the another first through hole 1111 of each first stator core 111 is denoted as a first through hole 1111b. The axial direction of the motor 11 is an extension direction of the axis O of the motor 11, and the axial direction of the motor 11 is also denoted as an axial direction O of the motor 11.

When the motor 11 is in an operating state, an alternating current applied to a plurality of conducting wires 131 of a winding 130 may cause a resistance loss. An alternating flux generated after the conducting wire 131 is energized further causes a hysteresis loss and an eddy current loss in the plurality of stator cores 110, causing heat generated by the stator core 110 and the winding 130 to continuously increase.

In this embodiment of this application, each first stator core 111 includes a first through hole 1111a and a first through hole 1111b. A maximum spacing between the first through hole 1111a and the axis O of the motor 11 in the radial direction R of the motor 11 is a maximum length of a connection line between the axis O of the motor 11 and a hole wall of the first through hole 1111a in the radial direction R of the motor 11. A minimum spacing between the first through hole 1111b and the axis O of the motor 11 in the radial direction R of the motor 11 is a minimum length of a connection line between the axis O of the motor 11 and a hole wall of the first through hole 1111b in the radial direction R of the motor 11. The maximum spacing between the first through hole 1111a and the axis O of the motor 11 is less than the minimum spacing between the first through hole 1111b and the axis O of the motor 11 in the radial direction R of the motor 11, that is, a projection of the first through hole 1111a does not overlap a projection of the first through hole 1111b. Coolant is conveyed to the first through hole 1111a and the first through hole 1111b, so that heat dissipation effect of both the stator core 110 and the winding slot 1100 can be considered, and multi-level cooling is implemented in the motor 11.

In this embodiment of this application, the first through hole 1111a is spaced from the first through hole 1111b, so that the first through hole 1111a and the first through hole 1111b form two parallel flow channels in a single first stator core 111. To convey the coolant to the first through hole 1111a and the first through hole 1111b of each first stator core 111, in this embodiment of this application, the at least one part of the outer circumferential surface of the second stator core 112a, the two first stator cores 111, and the inner circumferential surface of the motor housing 120 form the first gap 140, and one opening of the first through hole 1111a and one opening of the first through hole 1111b of each first stator core 111 is exposed to the first gap 140. In this way, the coolant conveyed from the inner circumferential surface of the motor housing 120 can flow to first through holes 1111a and first through holes 1111b of the two first stator cores 111 through the first gap 140. This helps reduce a loss of the coolant on a transmission path of each first stator core 111. In an embodiment, the coolant is any one of glycol cooling oil, synthetic oil, and mineral oil.

The first through hole 1111a is used as an example. That the one opening of the first through hole 1111a is exposed to the first gap 140 means that the one opening of the first through hole 1111a and the first gap 140 are adjacently arranged in the axial direction O of the motor 11, so that the coolant in the first gap 140 can directly flow to the first through hole 1111a.

On a basis that each first stator core 111 includes the first through hole 1111a and the first through hole 1111b, the coolant is conveyed to the first through hole 1111a and the first through hole 1111b in another manner. In a possible manner, the motor 11 does not include the second stator core 112a, a radial flow channel is additionally provided in each first stator core 111, and the first through hole 1111a communicates with the first through hole 1111b through the radial flow channel. After the coolant flows into the first through hole 1111b from the inner circumferential surface of the motor housing 120, the coolant may continue to flow to the first through hole 1111a. In this case, the first through hole 1111a and the first through hole 1111b actually form a flow channel in serial connection, and cooling effect may affect each other. In addition, if a blockage occurs at a position, a flow status of the coolant in the entire first stator core 111 is affected. In addition, in this manner, a size of the flow channel provided in the first stator core 111 is increased, and electromagnetic performance of the first stator core 111 is adversely affected.

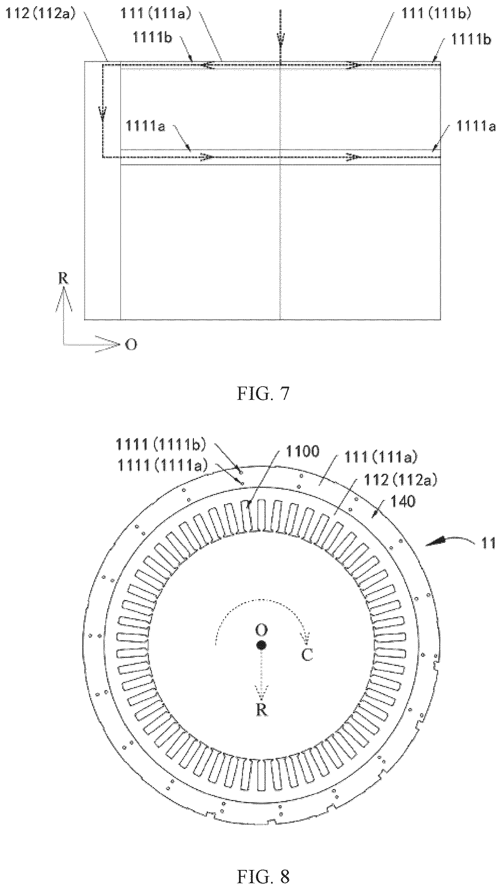

Refer to FIG. 7. FIG. 7 is a diagram of a partial structure of a motor in a conventional technology. In another possible manner, the second stator core 112a of the motor 11 is not located between the first stator core 111a and the first stator core 111b, but is located on a side that is of the first stator core 111a and that is away from the first stator core 111b in the axial direction O of the motor 11. One channel of coolant needs to first flow through the first through hole 1111b and the first through hole 1111a of the first stator core 111a before flowing to the first through hole 1111a of the first stator core 111b, and another channel of coolant may directly flow to the first through hole 1111b of the first stator core 111b. That is, the first through hole 1111b of the first stator core 111a, the first through hole 1111a of the first stator core 111a, and the first through hole 1111a of the first stator core 111b form one flow channel in serial connection. As the coolant flows in the flow channel in serial connection, a temperature continuously increases, and cooling effect of the coolant in the first through hole 1111a of the first stator core 111b is poorer than cooling effect of the coolant in the first through hole 1111b of the first stator core 111b, and the first stator core 111b may have uneven cooling effect.

Compared with the foregoing two manners, in this embodiment of this application, the second stator core 112a is located between the first stator core 111a and the first stator core 111b, and the first through hole 1111a and the first through hole 1111b of each first stator core 111 share the first gap 140 of the second stator core 112a. In other words, in the two first stator cores 111, flow channels formed by each first through hole 1111a and each first through hole 1111b are connected in parallel, and do not interfere with each other. Both the flow channels formed by each first through hole 1111a and each first through hole 1111b start from the first gap 140 of the second stator core 112a. The coolant may directly flow to first through holes 1111 at different positions in different first stator cores 111 through the first gap 140, to implement independent cooling of each first stator core 111. This helps reduce the loss of the coolant on the transmission path, and further reduce a difference in cooling effect at different positions in a same first stator core 111. In this way, overall cooling efficiency of the motor 11 is improved.

It should be noted that FIG. 7 merely shows an example in which a spacing between the first through hole 1111a and the axis O of the motor 11 is different from a spacing between and the first through hole 1111b and the axis O of the motor 11, and does not represent a specific position of the axis O of the motor 11.

Still refer to FIG. 4 and FIG. 5. In an embodiment, the first through hole 1111a of each first stator core 111 is arranged between two adjacent winding slots 1100 in the circumferential direction C of the motor 11. A maximum spacing between the first through hole 1111a of each first stator core 111 and the axis O of the motor 11 is less than or equal to a maximum spacing between each winding slot 1100 and the axis O of the motor 11 in the radial direction R of the motor 11.

The at least one part of the outer circumferential surface of the second stator core 112a includes one first slot 1121, and the first slot 1121 penetrates the second stator core 112a in the axial direction O of the motor 11. One opening of the first slot 1121 faces the inner circumferential surface of the motor housing 120 in the radial direction R of the motor 11, and at least one part of a projection of the first through hole 1111a is within a projection of the first slot 1121 in the axial direction O of the motor 11.

In this embodiment of this application, the maximum spacing between each winding slot 1100 and the axis O of the motor 11 is a maximum length of a connection line between the axis O of the motor 11 and a slot wall of each winding slot 1100 in the radial direction R of the motor 11.

In this embodiment of this application, the first stator core 111a is used as an example. A position of the first through hole 1111a in the first stator core 111a may change based on a heat dissipation requirement. For example, the first through hole 1111a is located between two adjacent winding slots 1100 in the circumferential direction C of the motor 11. In terms of structure, the maximum spacing between the first through hole 1111a and the axis O of the motor 11 is less than or equal to the maximum spacing between each winding slot 1100 and the axis O of the motor 11. Because a distance between the first through hole 1111a and the winding slot 1100 is shortened, cooling effect on the plurality of conducting wires 131 in the winding slot 1100 can be further enhanced.

In this embodiment of this application, a structure or the outer diameter that is of the second stator core 112a and that is used to form an outer circumferential surface of the first gap 140 needs to be correspondingly adjusted based on the position of the first through hole 1111a. When the first through hole 1111a is located between two adjacent winding slots 1100, because the outer diameter of the second stator core 112a cannot be less than the maximum spacing between the winding slot 1100 and the axis O of the motor 11, a part of the outer circumferential surface of the second stator core 112a may be recessed toward the axis O of the motor 11 in the radial direction R of the motor 11, to form one first slot 1121, so that the first slot 1121 is configured to form the first gap 140 with the two first stator cores 111 and the inner circumferential surface of the motor housing 120. The first slot 1121 penetrates the second stator core 112a in the axial direction O of the motor 11, so that the second stator core 112a plays a shunting role, to reduce flow resistance of the coolant. One opening of the first slot 1121 faces the inner circumferential surface of the motor housing 120 in the radial direction R of the motor 11, and a slot bottom of the first slot 1121 and the first through hole 1111a are both located between two same winding slots 1100, so that an axial projection of the first slot 1121 can cover at least one part of an axial projection of the first through hole 1111a, to implement communication between the first slot 1121 and the first through hole 1111a.

It should be noted that a projection of a through hole and a projection of a slot are respectively projections of areas enclosed by a hole wall of the through hole and an inner wall of the slot.

Refer to FIG. 8. FIG. 8 is a diagram of a partial structure of the motor 11 according to an embodiment of this application. In another embodiment, an outer diameter of the at least one part of the outer circumferential surface of the second stator core 112a is less than the maximum spacing between the first through hole 1111a of each first stator core 111 and the axis O of the motor 11 in the radial direction R of the motor 11. Correspondingly, the outer diameter of the at least one part of the outer circumferential surface of the second stator core 112a may further be greater than the maximum spacing between each winding slot 1100 and the axis O of the motor 11 in the radial direction R of the motor 11.

In this embodiment of this application, the first stator core 111a is used as an example. The first through hole 111la is closer to the axis O of the motor 11 than the first through hole 1111b in the radial direction R of the motor 11. That the maximum spacing between the first through hole 1111a and the axis O of the motor 11 is greater than the maximum spacing between each winding slot 1100 and the axis O of the motor 11 indicates that a projection of the first through hole 1111a does not overlap each winding slot 1100 in the circumferential direction C of the motor 11. To enable the first gap 140 to convey the coolant to the first through hole 111la, because the first through hole 1111a is not located between the two winding slots 1100, the outer diameter of the at least one part of the outer circumferential surface of the second stator core 112a may be adjusted to be less than the maximum spacing between the first through hole 1111a and the axis O of the motor 11. In this case, a position relationship between the second stator core 112a and the inner circumferential surface of the motor housing is caused by the outer diameter of the second stator core 112a. In an embodiment, the entire outer circumferential surface of the second stator core 112a is spaced from the inner circumferential surface of the motor housing in the radial direction R of the motor 11.

In this embodiment of this application, the outer diameter of the second stator core 112a cannot be excessively small either. Otherwise, adverse impact may be caused on the conducting wire accommodated in the winding slot 1100. Therefore, the outer diameter of the second stator core 112a is greater than the maximum spacing between each winding slot 1100 and the axis O of the motor 11, to ensure that each winding slot 1100 of the first stator core 111a and the second stator core 112a can be aligned in the axial direction O of the motor 11.

Still refer to FIG. 5 and FIG. 6. In an embodiment, a minimum width of the first slot 1121 is greater than an inner diameter of each first through hole 1111 in the circumferential direction C of the motor 11.

In this embodiment of this application, the first through hole 1111a and the first through hole 1111b are used as examples. The first gap 140 formed with participation of the first slot 1121 is used to guide the coolant to the first through hole 1111a and the first through hole 1111b of each first stator core 111. The minimum width of the first slot 1121 in the circumferential direction C of the motor 11 is greater than the inner diameter of each first through hole 1111, so that a projection of the first slot 1121 in the axial direction O of the motor 11 can cover the first through hole 1111a and the first through hole 1111b. This helps increase a volume of coolant that can be received by the first slot 1121, and reduce resistance of the coolant flowing from the first slot 1121 to the first through hole 1111a and the first through hole 1111b.

Still refer to FIG. 5 and FIG. 6. In an embodiment, a width of the one opening of the first slot 1121 is greater than a width of the slot bottom of the first slot 1121 in the circumferential direction C of the motor 11.

In this embodiment of this application, the opening and the slot bottom of the first slot 1121 are respectively close to the inner circumferential surface of the motor housing 120 and the axis O of the motor 11, the coolant flows from the opening to the slot bottom of the first slot 1121, and a circumferential width of the opening of the first slot 1121 is greater than a circumferential width of the slot bottom of the first slot 1121. This helps reduce flow resistance of the coolant in the first slot 1121.

Still refer to FIG. 6. In an embodiment, at least one slot wall of the first slot 1121 in the circumferential direction C of the motor 11 includes one first segment 1121a and one second segment 1121b that are connected to each other, the first segment 1121a is configured to form the opening of the first slot 1121, and the second segment 1121b is configured to form the slot bottom of the first slot 1121. A spacing between two ends of the first segment 1121a in the radial direction R of the motor 11 is less than a length of the first segment 1121a, and an included angle between an extension direction of the first segment 1121a and the radial direction R of the motor 11 is greater than an included angle between an extension direction of the second segment 1121b and the radial direction R of the motor 11.

In this embodiment of this application, the coolant flows from the first segment 1121a to the second segment 1121b, and a tilt angle of the first segment 1121a relative to the radial direction R of the motor 11 is greater than a tilt angle of the second segment 1121b relative to the radial direction R of the motor 11, so that the first segment 1121a can play a role of transition and buffering for the coolant. The second segment 1121b is configured to form the slot bottom of the first slot 1121, and the included angle between the second segment 1121b and the radial direction R of the motor 11 is relatively small, so that the coolant can be more accurately guided to the first through hole 1111a.

Still refer to FIG. 5. In an embodiment, the maximum spacing between the first slot 1121 and the axis O of the motor 11 is less than or equal to the maximum spacing between the first through hole 1111b and the axis O of the motor 11 in the radial direction R of the motor 11.

In this embodiment of this application, a maximum radial spacing between the first slot 1121 and the axis O of the motor 11 is a radial spacing between the opening of the first slot 1121 and the axis O of the motor 11. This embodiment of this application helps increase a size of the first gap 140, improve circulation at the first gap 140, and further avoid a case in which cooling efficiency of the winding 130 is reduced because excessive coolant overflows to an outer circumferential surface of each first stator core 111. In an embodiment, the first through hole 1111b is spaced from the outer circumferential surface of each first stator core 111 in the radial direction R of the motor 11. In this embodiment of this application, the first through hole 1111b receives the coolant through the first gap 140 of the second stator core 112a. Therefore, the spacing between the first through hole 1111b and the outer circumferential surface of each first stator core 111 does not prevent the coolant from flowing into the first through hole 1111b. In an embodiment, the first through hole 1111b communicates with the outer circumferential surface of each first stator core 111 in the radial direction R of the motor 11.

Still refer to FIG. 5. In an embodiment, the at least one part of the outer circumferential surface of the one second stator core 112 includes a plurality of first slots 1121, and the plurality of first slots 1121 are sequentially arranged in the circumferential direction C of the motor 11. Each first slot 1121 is configured to form one first gap 140. A ratio of a quantity of first slots 1121 of the one second stator core 112 to a quantity of first through holes 1111 of each first stator core 111 is less than or equal to 1/2.

In this embodiment of this application, the second stator core 112a includes the plurality of first slots 1121, the quantity of slots of the second stator core 112a is less than or equal to half of the quantity of first through holes 1111 of each first stator core 111, and each first slot 1121 is configured to communicate at least two first through holes 1111 of each first stator core 111. This helps improve efficiency of allocating coolant to each first slot 1121. The plurality of first slots 1121 are sequentially arranged in the circumferential direction C of the motor 11, and the first slots 1121 are distributed at different positions of the second stator core 112a, so that the coolant can be conveyed to first through holes 1111 located at different positions of the first stator core 111, and a heat dissipation area of the coolant in the stator core 110 can be increased.

It should be noted that, in this embodiment of this application, when the second stator core 112a includes the plurality of first slots 1121, the first through hole 1111a and the first through hole 1111b of each first stator core 111 represent two types of first through holes 1111, that is, each first stator core 111 includes a plurality of first through holes 1111a and a plurality of first through holes 1111b. The first through holes 1111a are sequentially arranged in the circumferential direction C of the motor 11, and the first through holes 1111b are sequentially arranged in the circumferential direction C of the motor 11. A maximum spacing between each first through hole 1111a and the axis O of the motor 11 is less than a minimum spacing between each first through hole 1111b and the axis O of the motor 11, and each first slot 1121 is configured to correspond to one first through hole 1111a and one first through hole 1111b.

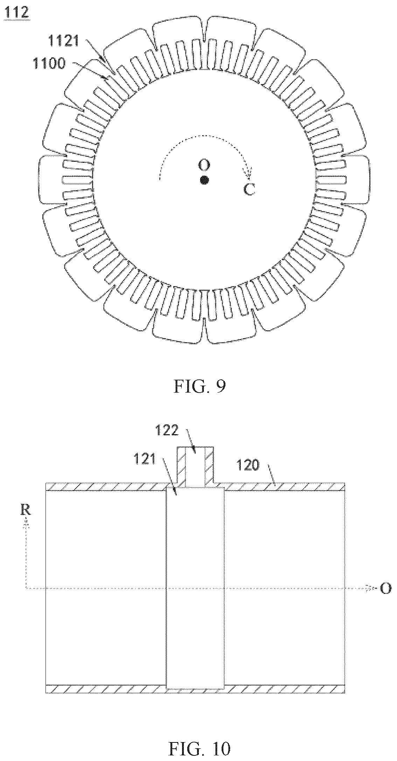

Still refer to FIG. 6. In an embodiment, when a plurality of stator cores 110 are fastened through soldering, each first stator core 111 further includes a plurality of first soldering slots 1112, and the plurality of first soldering slots 1112 are spaced from the plurality of first through holes 1111b in the circumferential direction C of the motor 11. Each second stator core 112 further includes a plurality of second soldering slots 1122, and the plurality of second soldering slots 1122 are spaced from the plurality of first slots 1121 in the circumferential direction C of the motor 11. The first soldering slot 1112 and the second soldering slot 1122 in this embodiment of this application facilitate fastening of the plurality of stator cores 110 by using soldering operations. It may be understood that, when the plurality of stator cores 110 are fastened in another manner, for example, through bonding or jointing, each first stator core 111 may include no first soldering slot 1112, and each second stator core 112 may include no second soldering slot 1122. Refer to FIG. 9. FIG. 9 is a diagram of a structure of the second stator core 112 according to an embodiment of this application. The second stator core 112 may be in a structure shown in FIG. 9. This helps increase the volume of the first gap 140 and improve circulation.

Refer to FIG. 5 and FIG. 10. FIG. 10 is a sectional view of the motor housing 120 according to an embodiment of this application. In an embodiment, the inner circumferential surface of the motor housing 120 includes one second slot 121, the second slot 121 is recessed away from the second stator core 112a in the radial direction R of the motor 11, and the second slot 121 extends in the circumferential direction C of the motor 11.

In this embodiment of this application, a part of the inner circumferential surface of the motor housing 120 is recessed away from the second stator core 112a in the radial direction R of the motor 11, to form the second slot 121, and the second slot 121 is configured to participate in forming the first gap 140. The second slot 121 extends in the circumferential direction C of the motor 11, so that the coolant can flow in the circumferential direction C of the motor 11, and communication between the plurality of first slots 1121 in the second stator core 112a is implemented. This helps reduce flow resistance of the coolant and improve heat dissipation efficiency.

Still refer to FIG. 5 and FIG. 10. In an embodiment, the inner circumferential surface of the one motor housing 120 includes one liquid inlet 122, and a spacing between a center of the liquid inlet 122 and the second stator core 112a is less than a spacing between the center of the liquid inlet 122 and the two first stator cores 111 in the axial direction O of the motor 11.

In this embodiment of this application, the coolant is conveyed from the inner circumferential surface of the motor housing 120 to the second stator core 112a through the liquid inlet 122. The second stator core 112a is located between the two first stator cores 111 in the axial direction O of the motor 11, and an axial spacing between the center of the liquid inlet 122 and the second stator core 112a is less than a spacing between the center of the liquid inlet 122 and each first stator core 111, so that the coolant flowing out from the liquid inlet 122 can smoothly flow to the second stator core 112a. In an embodiment, the liquid inlet 122 is aligned with the first slot 1121 in the radial direction R of the motor 11. In this embodiment of this application, the coolant can directly flow into the first slot 1121 from the liquid inlet 122. This shortens a transmission path of the coolant between the liquid inlet 122 and the first slot 1121, and helps reduce an energy loss of the coolant. In an embodiment, the liquid inlet 122 is located in the second slot 121.

Still refer to FIG. 4. In an embodiment, a thickness of the second stator core 112a is less than a thickness of either of the two first stator cores 111 in the axial direction O of the motor 11.

In this embodiment of this application, the second stator core 112a mainly functions to allocate the coolant. An axial thickness of the second stator core 112a is less than an axial thickness of each first stator core 111, so that the coolant can flow from the second stator core 112a to each first stator core 111 more quickly. At least one part of the outer circumferential surface of the second stator core 112a needs to be spaced from the inner circumferential surface of the motor housing 120. Therefore, for the at least one part of the outer circumferential surface of the second stator core 112a, a means like decreasing the outer diameter or providing the first slot 1121 is used. In this embodiment of this application, the axial thickness of the second stator core 112a is relatively small. This is equivalent to slight overall adjustment of the plurality of stator cores 110, and can reduce impact on overall electromagnetic performance of the plurality of stator cores 110.

In this embodiment of this application, the axial thickness of each first stator core 111 is relatively large, the plurality of first through holes 1111 of each first stator core 111 can receive the coolant through the first gap 140, and the coolant can cool each first stator core 111 with the relatively large axial thickness. This helps expand a contact area between the coolant and the plurality of stator cores 110.

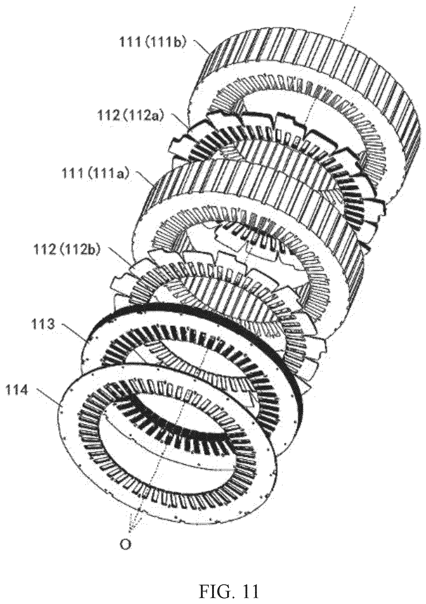

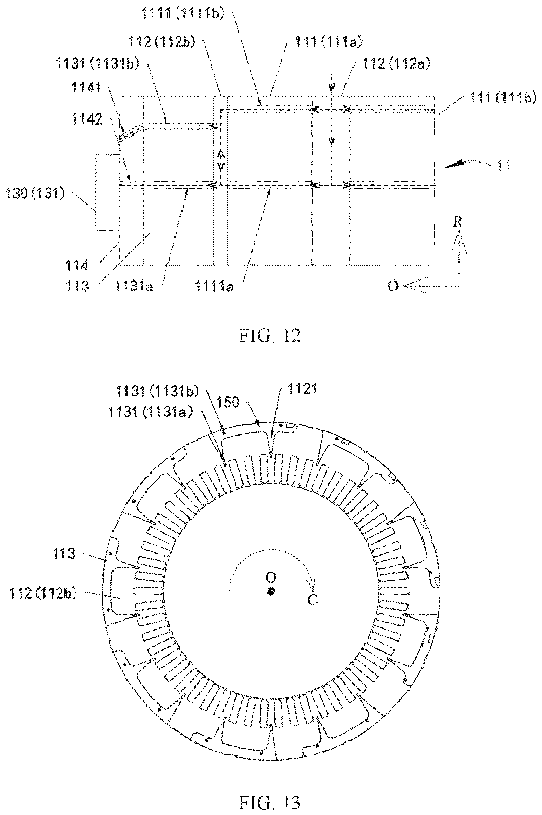

Refer to FIG. 11 and FIG. 12. FIG. 11 is a partial exploded view of the motor 11 according to an embodiment of this application. FIG. 12 is a partial sectional view of the motor 11 according to an embodiment of this application. A black dashed line and an adjacent arrow in FIG. 12 respectively represent a flow path and a flow direction of the coolant.

In an embodiment, the plurality of stator cores 110 further include another second stator core 112 and one third stator core 113, and the another second stator core 112 is arranged between one first stator core 111 and the one third stator core 113 in the axial direction O of the motor 11.

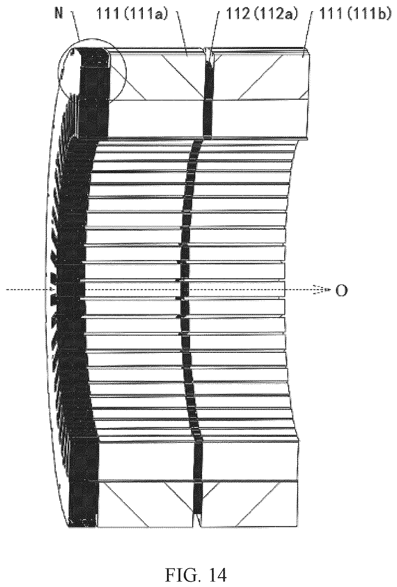

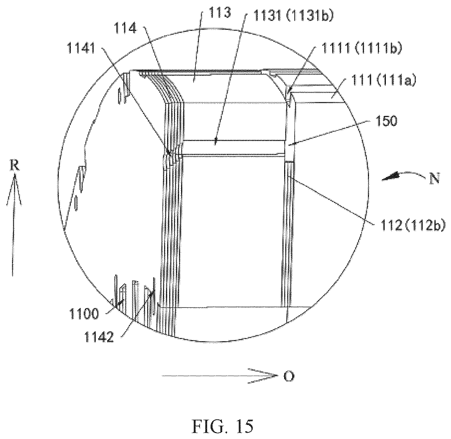

With reference to FIG. 12 to FIG. 15. FIG. 13 is a diagram of a partial structure of the motor 11 according to an embodiment of this application. FIG. 14 is a partial sectional view of the motor 11 according to an embodiment of this application. FIG. 15 is a partial enlarged view of an N part in the motor 11 shown in FIG. 14. The one third stator core 113 includes a plurality of second through holes 1131. The plurality of second through holes 1131 penetrate the one third stator core 113 in the axial direction O of the motor 11, and a maximum spacing between the plurality of second through holes 1131 and the axis O of the motor 11 is less than a minimum spacing between the first through hole 1111b and the axis O of the motor 11 in the radial direction R of the motor 11.

Still refer to FIG. 11 to FIG. 15. At least one part of an outer circumferential surface of the another second stator core 112 is spaced from the inner circumferential surface of the motor housing in the radial direction R of the motor 11. The at least one part of the outer circumferential surface of the another second stator core 112, the one first stator core 111, the one third stator core 113, and the one motor housing 120 form one second gap 150, and one second through hole 1131 and another second through hole 1131 of the one third stator core 113 receive, through the one second gap 150, coolant output by the first stator core 111a. The other opening of the first through hole 1111a, the other opening of the first through hole 1111b, one opening of the one second through hole 1131, and one opening of the another second through hole 1131 are exposed to the one second gap 150 in the axial direction O of the motor 11. A maximum spacing between the one second through hole 1131 and the axis O of the motor 11 is less than a minimum spacing between the another second through hole 1131 and the axis O of the motor 11 in the radial direction R of the motor 11.

In this embodiment of this application, for ease of description, the another second stator core 112 is denoted as a second stator core 112b. The third stator core 113, the second stator core 112b, and the first stator core 111a are sequentially arranged in the axial direction O of the motor 11. A maximum radial spacing between the plurality of second through holes 1131 and the axis O of the motor 11 is less than a maximum radial spacing between the first through hole 1111b and the axis O of the motor 11, that is, the plurality of second through holes 1131 are closer to the plurality of conducting wires 131 in the winding slot 1100 than the first through hole 1111b. In an embodiment, a spacing between the third stator core 113 and one end of the plurality of conducting wires 131 is less than a spacing between the first stator core 111a and the one end of the plurality of conducting wires 131. The third stator core 113 is closer to the one end of the plurality of conducting wires 131 than the first stator core 111a. This helps enhance cooling efficiency of the coolant in the second through hole 1131 on an end part of the conducting wire 131.

In this embodiment of this application, because the plurality of first through holes 1111 of the first stator core 111a and the plurality of second through holes 1131 of the third stator core 113 are not completely aligned, if the first stator core 111a and the third stator core 113 are directly adjacently arranged in the axial direction O of the motor 11, coolant in the first through hole 1111b cannot flow to the third stator core 113. Therefore, in this embodiment of this application, the second gap 150 is formed by using the second stator core 112b, and a projection of the second gap 150 in the axial direction O of the motor 11 covers the plurality of first through holes 1111 of the first stator core 111a and the plurality of second through holes 1131 of the third stator core 113, so that the second through hole 1131 can receive the coolant conveyed from the first stator core 111a.

In this embodiment of this application, for ease of description, the one second through hole 1131 is denoted as a second through hole 1131a, and the another second through hole 1131 is denoted as a second through hole 1131b. As shown in FIG. 12, the second stator core 112b not only implements flowing of the coolant between the first stator core 111a and the third stator core 113, but also can be used to alleviate a blocking problem and implement appropriate distribution of a flow of coolant in different stator cores 110.

Specifically, because the third stator core 113 is closer to the one end of the conducting wires 131 than the first stator core 111a, the second through hole 1131 of the third stator core 113 is more likely to be blocked than the first through hole 1111 of the first stator core 111a. If one of the second through hole 1131a and the second through hole 1131b is blocked, because the second through hole 1131a and the second through hole 1131b form two parallel flow channels, and the parallel flow channels do not affect each other, it is difficult for the other of the second through hole 1131a and the second through hole 1131b to play an anti-blocking role. The second stator core 112b in this embodiment of this application actually provides a scenario in which different parallel flow channels of the first stator core 111a and the third stator core 113 are connected in series. For example, the second through hole 1131a is blocked. Because the second stator core 112b is farther away from the liquid inlet 122 than the second stator core 112a in the axial direction O of the motor 11, a force for the coolant in the second stator core 112b may be less than a force for the coolant in the second stator core 112a, so that the coolant in the second through hole 1131a can flow back to the second gap 150 of the second stator core 112b, and continue to flow into the second through hole 1131b. Blocking of the second through hole 1131b is similar.

In addition, even if no blockage occurs, when a flow in the first through hole 1111a is greater than a flow in the first through hole 1111b in the first stator core 111a, the flow of the coolant may further be reallocated through the second stator core 112b, that is, a part of the coolant in the first through hole 1111a flows into the second through hole 1131a through the second gap 150 of the second stator core 112b, another part of coolant in the first through hole 1111a flows into the second through hole 1131b through the second gap 150 of the second stator core 112b, to avoid a problem that local coolant is insufficient in the third stator core 113. A case in which the flow in the first through hole 1111b is greater than the flow in the first through hole 1111a in the first stator core 111a is similar.

It should be noted that, the second stator core 112b may use a same structure as the second stator core 112a, or the second stator core 112b may use a structure different from the second stator core 112a, provided that the second gap 150 formed by using the second stator core 112b can be configured to connect the first stator core 111a and the third stator core 113.

It should be further noted that FIG. 12 and FIG. 15 merely show an example of a case in which both a spacing between the second through hole 1131a and the axis O of the motor 11 and a spacing between the second through hole 1131b and the axis O of the motor 11 are different from a spacing between the first through hole 1111b and the axis O of the motor 11, and the spacing between the second through hole 1131a and the axis O of the motor 11 is different from the spacing between the second through hole 1131b and the axis O of the motor 11, and do not represent a specific position of the axis O of the motor 11.

Still refer to FIG. 11. In an embodiment, a thickness of the second stator core 112b is less than a thickness of either the first stator core 111a or the third stator core 113 in the axial direction O of the motor 11.

In this embodiment of this application, the second stator core 112b mainly functions to allocate the coolant. An axial thickness of the second stator core 112b is less than the thickness of either of the first stator core 111a or the third stator core 113, so that the coolant can flow from the second stator core 112b to the third stator core 113 more quickly. In addition, impact on overall electromagnetic performance of the plurality of stator cores 110 can be reduced.

In this embodiment of this application, the axial thickness of the third stator core 113 is relatively large, the plurality of second through holes 1131 of the third stator core 113 can receive the coolant through the second gap 150, and the coolant can cool the third stator core 113 with the relatively large axial thickness. This helps expand a contact area between the coolant and the plurality of stator cores 110.

Still refer to FIG. 11, FIG. 12, and FIG. 15. In an embodiment, the plurality of stator cores 110 further include one fourth stator core 114, and the one third stator core 113 is located between the second stator core 112b and the one fourth stator core 114 in the axial direction O of the motor 11. One end of the plurality of conducting wires 131 is exposed to each winding slot of the one fourth stator core 114.

The one fourth stator core 114 includes a plurality of third through holes 1141, the plurality of third through holes 1141 penetrate the one fourth stator core 114, extension directions of the plurality of third through holes 1141 intersect the axis O of the motor 11, and one opening of each third through hole 1141 and the other opening of the second through hole 1131b in the one third stator core 113 are adjacently arranged in the axial direction O of the motor 11. In the radial direction R of the motor 11, a spacing between each third through hole 1141 and the axis O of the motor 11 decreases from the one opening of each third through hole 1141 to the other opening of the third through hole 1141.

In this embodiment of this application, the fourth stator core 114, the third stator core 113, and the second stator core 112b are sequentially arranged in the axial direction O of the motor 11. The fourth stator core 114 is closer to the one end of the plurality of conducting wires 131 than the third stator core 113 in the axial direction O of the motor 11, and the one end of the plurality of conducting wires 131 is exposed to each winding slot 1100 of the fourth stator core 114. The fourth stator core 114 includes a plurality of third through holes 1141, one third through hole 1141 communicates with the second through hole 1131b of the third stator core 113, and each third through hole 1141 can receive the coolant conveyed by the third stator core 113. Different from extension directions of the first through hole 1111 and the second through hole 1131, an extension direction of the third through hole 1141 of the fourth stator core 114 intersects with the axis O of the motor 11, and a spacing between the third through hole 1141 and the one end of the plurality of conducting wires 131 gradually decreases in the radial direction R of the motor 11, so that the coolant can be sprayed from the third through hole 1141 to the outside of the one end of the plurality of conducting wires 131, to cool an end part of the winding 130 and improve utilization of the coolant.

Still refer to FIG. 11, FIG. 12, and FIG. 15. In an embodiment, the one fourth stator core 114 further includes a plurality of fourth through holes 1142, and the plurality of fourth through holes 1142 penetrate the fourth stator core 114 in the axial direction O of the motor 11. A maximum spacing between each fourth through hole 1142 and the axis O of the motor 11 is less than a minimum spacing between each third through hole 1141 and the axis O of the motor 11 in the radial direction R of the motor 11. One opening of each fourth through hole 1142 and one second through hole 1131 of the one third stator core 113 are adjacently arranged in the axial direction O of the motor 11.

In this embodiment of this application, the plurality of fourth through holes 1142 of the fourth stator core 114 extend in the axial direction O of the motor 11, each fourth through hole 1142 communicates with the second through hole 1131a of the third stator core 113, and the fourth through hole 1142 can receive the coolant from the third stator core 113. Each fourth through hole 1142 is closer to the axis O of the motor 11 than each third through hole 1141 in the radial direction R of the motor 11. The fourth through hole 1142 cooperates with the third through hole 1141, so that three-dimensional cooling can be implemented on the plurality of conducting wires 131, and heat dissipation effect on the end part of the winding 130 is comprehensively improved.

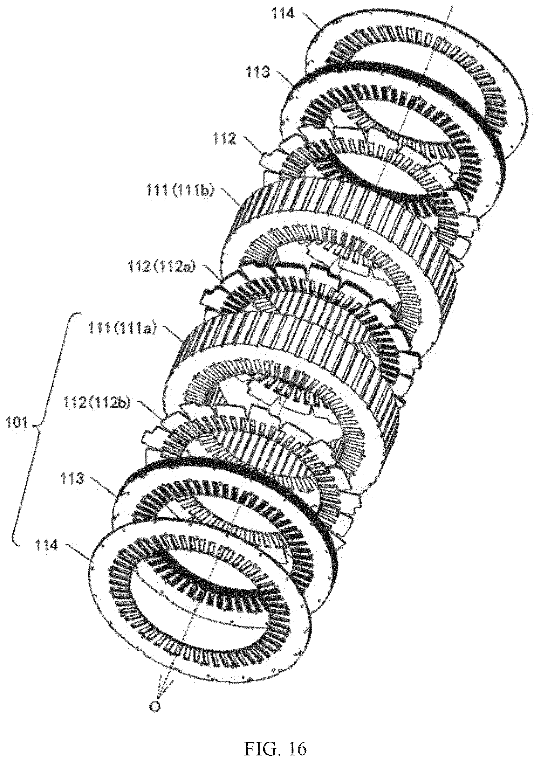

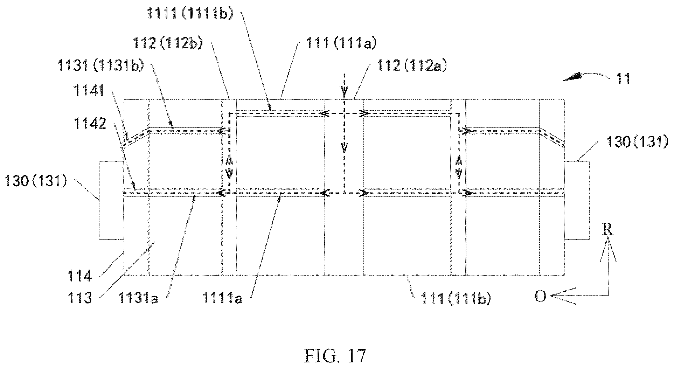

Refer to FIG. 16 and FIG. 17. FIG. 16 is a partial exploded view of the motor 11 according to an embodiment of this application. FIG. 17 is a partial sectional view of the motor 11 according to an embodiment of this application. A black dashed line and an adjacent arrow in FIG. 17 respectively represent a flow path and a flow direction of the coolant.

In an embodiment, the first stator core 111a, the second stator core 112b, the third stator core 113, and the fourth stator core 114 form one stator core group 101, the motor 11 includes the second stator core 112a and two stator core groups 101, and the two stator core groups 101 are axially symmetrical with respect to the second stator core 112a.

In this embodiment of this application, the two stator core groups 101 are symmetrically arranged on two sides of the second stator core 112a in the axial direction O of the motor 11, and a cooling flow channel formed is shown in FIG. 17. This helps alleviate blocking on two sides of the plurality of stator cores 110, implement appropriate distribution of the coolant on the two sides of the plurality of stator cores 110, and enhance cooling efficiency on two ends of the plurality of conducting wires. In addition, the two stator core groups 101 do not interfere with each other, and flow channels in the two stator core groups 101 are independent of each other, so that a case in which the coolant flows to the other stator core group 101 only after flowing through one stator core group 101 can be avoided, to ensure uniform cooling of the two stator core groups 101.

It should be noted that FIG. 17 merely shows an example in which a spacing between the first through hole 1111a and the axis O of the motor 11 is different from a spacing between the first through hole 1111b and the axis O of the motor 11, both a spacing between the second through hole 1131a and the axis O of the motor 11 and a spacing between the second through hole 1131b and the axis O of the motor 11 are different from the spacing between the first through hole 1111b and the axis O of the motor 11, and the spacing between the second through hole 1131a and the axis O of the motor 11 is different from the spacing between the second through hole 1131b and the axis O of the motor 11, and does not represent a specific position of the axis O of the motor 11.

The motor, the powertrain, and the vehicle provided in embodiments of this application are described in detail above. Specific examples are used herein to explain the principles and embodiments of this application, and the descriptions of embodiments are only intended to facilitate an understanding of the method of this application and the core idea thereof. In addition, a person of ordinary skill in the art may make modifications to the specific embodiments and the application scope based on the idea of this application. In conclusion, the content of this specification shall not be construed as a limitation on this application.

## Claims

1. A motor, wherein the motor comprises one motor housing and a plurality of stator cores, the one motor housing is configured to accommodate the plurality of stator cores, a plurality of winding slots of each stator core are sequentially arranged in a circumferential direction of the motor, each winding slot is configured to accommodate a plurality of conducting wires, and the plurality of stator cores comprise:
two first stator cores, wherein each first stator core comprises a plurality of first through holes, the plurality of first through holes penetrate each first stator core in an axial direction of the motor, and the plurality of first through holes of each first stator core are spaced from the plurality of winding slots of each first stator core; and
one second stator core, wherein the one second stator core is arranged between the two first stator cores in the axial direction of the motor, wherein
at least one part of an outer circumferential surface of the one second stator core, the two first stator cores, and the one motor housing form one first gap, one opening of one of the first through holes and one opening of another of the first through holes of each first stator core are exposed to the one first gap in the axial direction of the motor, and a maximum spacing between the one first through hole and an axis of the motor is less than a minimum spacing between the another first through hole and the axis of the motor in a radial direction of the motor.

2. The motor according to claim 1, wherein an outer diameter of the at least one part of the outer circumferential surface of the one second stator core is greater than a maximum spacing between each winding slot and the axis of the motor in the radial direction of the motor, and the outer diameter of the at least one part of the outer circumferential surface of the one second stator core is less than the maximum spacing between the one first through hole and the axis of the motor in the radial direction of the motor.

3. The motor according to claim 1, wherein the one first through hole is arranged between two adjacent winding slots in the circumferential direction of the motor, and the maximum spacing between the one first through hole and the axis of the motor is less than or equal to a maximum spacing between each winding slot and the axis of the motor in the radial direction of the motor; and
the at least one part of the outer circumferential surface of the one second stator core comprises one first slot, the one first slot penetrates the one second stator core in the axial direction of the motor, one opening of the one first slot faces an inner circumferential surface of the one motor housing in the radial direction of the motor, and at least one part of a projection of the one first through hole is within a projection of the one first slot in the axial direction of the motor.

4. The motor according to claim 3, wherein a minimum width of the one first slot is greater than an inner diameter of each first through hole in the circumferential direction of the motor.

5. The motor according to claim 3 or 4, wherein a width of the one opening of the one first slot is greater than a width of a slot bottom of the one first slot in the circumferential direction of the motor.

6. The motor according to any one of claims 3 to 5, wherein a maximum spacing between the one first slot and the axis of the motor is less than or equal to a maximum spacing between the another first through hole and the axis of the motor in the radial direction of the motor.

7. The motor according to any one of claims 3 to 6, wherein the at least one part of the outer circumferential surface of the one second stator core comprises a plurality of first slots, the plurality of first slots are sequentially arranged in the circumferential direction of the motor, each first slot is used to form the one first gap, and a ratio of a quantity of the first slots of the one second stator core to a quantity of the first through holes of each first stator core is less than or equal to 1/2.

8. The motor according to any one of claims 1 to 7, wherein the inner circumferential surface of the one motor housing comprises one second slot, the one second slot is recessed away from the one second stator core in the radial direction of the motor, and the one second slot extends in the circumferential direction of the motor.

9. The motor according to any one of claims 1 to 8, wherein the inner circumferential surface of the one motor housing comprises one liquid inlet, and a spacing between a center of the one liquid inlet and the one second stator core is less than a spacing between the center of the one liquid inlet and each of the two first stator cores in the axial direction of the motor.

10. The motor according to any one of claims 1 to 9, wherein a thickness of the one second stator core is less than a thickness of either of the two first stator cores in the axial direction of the motor.

11. The motor according to any one of claims 1 to 10, wherein the plurality of stator cores further comprise another second stator core and one third stator core, and the another second stator core is arranged between one of the first stator cores and the one third stator core in the axial direction of the motor;
the one third stator core comprises a plurality of second through holes, the plurality of second through holes penetrate the one third stator core in the axial direction of the motor, and a maximum spacing between the plurality of second through holes and the axis of the motor is less than the maximum spacing between the another first through hole and the axis of the motor in the radial direction of the motor; and
the at least one part of an outer circumferential surface of the another second stator core, one of the first stator cores, the one third stator core, and the one motor housing form one second gap, the other opening of the one first through hole, the other opening of the another first through hole, one opening of one of the second through holes, and one opening of another of the second through holes are exposed to the one second gap in the axial direction of the motor, and a maximum spacing between the one second through hole and the axis of the motor is less than a minimum spacing between the another second through hole and the axis of the motor in the radial direction of the motor.

12. The motor according to claim 11, wherein the plurality of stator cores further comprise one fourth stator core, the one third stator core is located between the another second stator core and the one fourth stator core in the axial direction of the motor, and one end of each of the plurality of conducting wires is exposed to each winding slot of the one fourth stator core; and
the one fourth stator core comprises a plurality of third through holes, the plurality of third through holes penetrate the one fourth stator core, extension directions of the plurality of third through holes intersect the axis of the motor, one opening of each third through hole and the other opening of the another second through hole of the one third stator core are adjacently arranged in the axial direction of the motor, and a spacing between each third through hole and the axis of the motor decreases from the one opening of each third through hole to the other opening of the third through hole in the radial direction of the motor.

13. The motor according to claim 12, wherein the one fourth stator core further comprises a plurality of fourth through holes, the plurality of fourth through holes penetrate the one fourth stator core in the axial direction of the motor, a maximum spacing between each fourth through hole and the axis of the motor is less than a minimum spacing between each third through hole and the axis of the motor in the radial direction of the motor, and one opening of each fourth through hole and the one second through hole of the one third stator core are adjacently arranged in the axial direction of the motor.

14. A powertrain, wherein the powertrain comprises a motor controller, a reducer, and the motor according to any one of claims 1 to 13, the motor controller is configured to provide electric energy for a winding of the motor, and the motor is configured to be in transmission connection to the reducer.

15. A vehicle, wherein the vehicle comprises a vehicle frame, a battery pack, and the powertrain according to claim 14, the vehicle frame is configured to fasten the battery pack and the powertrain, the battery pack is configured to supply power to the motor through the motor controller, and the powertrain is configured to drive a wheel of the vehicle through the motor.
